(19)

**Europäisches Patentamt**

**European Patent Office**

**Office européen des brevets**

(11) **EP 4 617 741 A2**

(12) **EUROPEAN PATENT APPLICATION**

(43) Date of publication:
**17.09.2025 Bulletin 2025/38**

(21) Application number: **25161830.2**

(22) Date of filing: **05.03.2025**

(51) International Patent Classification (IPC):
**G02B 6/12** (2006.01)   **G02B 6/124** (2006.01)
**G02B 6/126** (2006.01)   **G02B 6/27** (2006.01)
**G02B 6/30** (2006.01)

(52) Cooperative Patent Classification (CPC):
**G02B 6/12019; G02B 6/12004; G02B 6/12007;
G02B 6/12009; G02B 6/12014; G02B 6/12023;
G02B 6/124; G02B 6/126; G02B 6/2773;
G02B 6/30**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.03.2024 US 202418604482**

(71) Applicant: **Avago Technologies International
Sales
Pte. Limited
Singapore 768923 (SG)**

(72) Inventor: **Soole, Julian Bernard Donald
Edison, NJ 08837 (US)**

(74) Representative: **Grünecker Patent- und
Rechtsanwälte
PartG mbB
Leopoldstraße 4
80802 München (DE)**

(54) **FABRICATION-TOLERANT PLANAR OPTICAL WAVELENGTH MULTIPLEXER/DEMULTIPLEXER**

(57)     An apparatus includes a first coupler formed on a substrate coupled with multiple waveguides spaced apart respectively to channel multiple input lights with different wavelengths. The apparatus further includes a wavelength dispersive device formed on the substrate and configured to diffract the multiple input lights to generate an image of diffracted lights coincident at a spot on a focal line associated with the wavelength dispersive device. The apparatus also includes a second coupler positioned in a proximity outside of the substrate and configured to out-couple a light signal with multiplexed wavelengths directly from the image at the spot of the focal line to an external optical device. The multiplexed wavelengths include all different wavelengths of the multiple input lights. The apparatus may include waveguide tapers to re-image the light focused by the wavelength dispersive device to improve coupling efficiency and tolerance. The apparatus may be operated as a wavelength multiplexer or demultiplexer.

FIG. 1
(Existing Art)

**Description**

FIELD OF INVENTION

The subject technology is directed to optical devices and methods of manufacturing.

BACKGROUND OF THE INVENTION

Silicon photonics is a rapidly evolving field of technology that merges photonics, the science of light, with silicon microelectronics in which silicon is used as the primary material to build optical components alongside electronic circuits. Multiple optical functions are realized in devices based on a silicon substrate that is hybrid integrated with chips performing electrical measurement, processing, and control functions. For silicon photonics systems employing multiple wavelengths, integrated wavelength multiplexers (mux) and demultiplexers (demux) are required to allow the wavelength channels to pass through with low loss. This typically requires the mux/demux wavelength passbands in the fabricated optical system to be accurately aligned with the system channel wavelengths. Fabrication limitations of silicon photonics devices, in terms of material deposition and processing tolerances, however, can limit the accuracy with which the mux/demux device optical channel wavelengths can be determined. As a result, the passbands of the fabricated mux/demux devices may be displaced from the target optical channels and significant transmission losses may occur. In the case of the wavelength demultiplexer, potentially detrimental optical crosstalk may also occur. Fabrication dependent wavelength misalignment reduces the manufacturing yield of the mux/demux devices and increases costs. In some cases, it may become necessary to perform materials post-processing to shift the channel wavelengths in order to obtain acceptable wavelength performance. Therefore, fabrication-tolerant silicon photonics devices such as planar waveguide-based mux/demux and methods of making these devices are desired.

BRIEF DESCRIPTION OF THE DRAWINGS

A further understanding of the nature and advantages of particular embodiments may be realized by reference to the remaining portions of the specification and the drawings, in which like reference numerals are used to refer to similar components. In some instances, a sub-label is associated with a reference numeral to denote one of multiple similar components. When reference is made to a reference numeral without specification to an existing sub-label, it is intended to refer to all such multiple similar components.

FIG. 1 shows an existing wavelength dispersive arrayed waveguide (AWG) device used as a multiplexer.

FIG. 2A is a schematic diagram of a fabrication-tolerant AWG multiplexer with a curved focal line according to an embodiment of the subject technology.

FIG. 2B is a schematic diagram of a fabrication-tolerant AWG multiplexer with a curved focal line according to another embodiment of the subject technology.

FIG. 3A is a schematic diagram of a fabrication-tolerant AWG multiplexer with a flat-field focus according to an embodiment of the subject technology.

FIG. 3B is a schematic diagram of a reflection grating multiplexer with a flat-field focus.

FIG. 4 is a schematic diagram of a fabrication-tolerant AWG multiplexer and an array of tapered waveguides according to an embodiment of the subject technology.

FIG. 5 is a schematic diagram of light spot imaging and expansion provided by the array of tapered waveguides of FIG. 4.

FIG. 6A shows simulated mode expansion provided by the array of tapered waveguides for a light spot originating at the center of the array.

FIG. 6B shows simulated mode expansion provided by the array of tapered waveguides for a light spot originating at a location laterally offset from the center of the array.

FIG. 7A shows simulation results of a loss dependence on fabrication-induced wavelength offset for an AWG multiplexer without a tapered waveguide outcoupling array (dashed line) and with a tapered waveguide outcoupling array according to an embodiment of the subject technology (solid line).

FIG. 7B shows simulation results of output coupling misalignment tolerance for an AWG multiplexer with a tapered waveguide array, in the presence of fabrication-induced wavelength offset. Coupling loss for misalignment parallel (solid line) and perpendicular (dashed line) to the plane of the device.

FIG. 8A is a schematic diagram of an AWG demultiplexer according to an embodiment of the subject technology comprising a multimode waveguide for each output light beam.

FIG. 8B is a schematic diagram of an AWG demultiplexer according to an embodiment of the subject technology further comprising a mode stripper coupled to the multimode waveguide for removing non-guided and weakly guided modes before reaching a photodetector.

FIG. 8C is a schematic diagram of an AWG demultiplexer according to an embodiment of the subject technology further comprising a multimode interference filter coupled to a single-mode output waveguide before a photodetector.

FIG. 8D is a schematic diagram of an AWG demultiplexer according to an embodiment of the subject technology further comprising a broad passband filter coupled to the single-mode waveguide before a photodetector.

FIG. 9 shows simulation results of a transmission profile dependence on fabrication-related wavelength shifts for an AWG demultiplexer according to an embodiment of the subject technology. The solid line simulates the case with no fabrication-dependent AWG wavelength shift and the dashed line simulates the case with a fabrication-dependent AWG wavelength shift.

FIG. 10A is a schematic diagram of an AWG demultiplexer according to an embodiment of the subject technology with TE and TM polarized incoming light separated and in-coupled at different locations on the end of the taper array.

FIG. 10B is a schematic diagram of an AWG demultiplexer according to another embodiment of the subject technology with TE and TM polarized incoming light separated and each in-coupled to the end of separate taper arrays.

FIG. 10C is a schematic diagram of an AWG demultiplexer according to yet another embodiment of the subject technology with TE and TM polarized incoming light separated and focused at different input points on the input focal line of the AWG.

FIG. 11 is a schematic diagram of an AWG multiplexer according to an embodiment of the subject technology with a grating coupler for directly coupling multiplexed light to an external optical device positioned above the substrate at an angle to the substrate.

DETAILED DESCRIPTION OF THE INVENTION

The present invention is directed to an apparatus used in optical systems employing multiple wavelengths. In an embodiment, the apparatus includes a first coupler formed on a substrate coupled with multiple waveguides spaced apart respectively to channel multiple input lights with different wavelengths. The apparatus further includes a wavelength dispersive device formed on the substrate and configured to diffract the multiple input lights to generate an image of diffracted lights coincident at a spot on a focal line associated with the wavelength dispersive device. The apparatus also includes a second coupler positioned in a proximity outside of the substrate and is configured to out-couple a light signal with multiplexed wavelengths directly from the image at the spot on the focal line to an external optical device, and acts as a wavelength multiplexer. The apparatus also functions in reverse, as a demultiplexer, with the second coupler configured to in-couple multiwavelength light to a spot on the focal line of the wavelength dispersive device and the first coupler acting to out-couple the different demultiplexed wavelengths. There are many other embodiments as well.

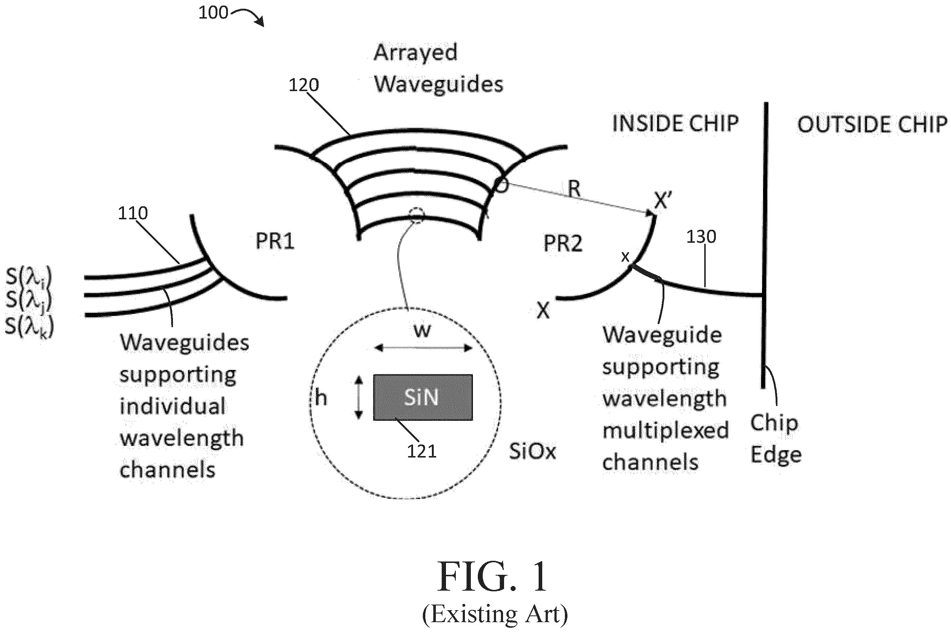

The subject technology teaches methods to ameliorate the requirement for high fabrication tolerances in the realization of a silicon photonics planar dispersive device such as an arrayed waveguide grating (AWG) mux/demux. These methods are applied to assure high power coupling efficiencies with acceptable tolerances to an externally connecting device such as an optical fiber, lens, or lensed fiber, in the presence of fabrication variations. FIG. 1 shows the wavelength dispersive AWG device 100 used as a multiplexer. Light beams with different wavelengths ($\lambda_i$, $\lambda_j$, $\lambda_k$, etc.) are inputted on separate waveguides (e.g., with a SiN core) formed on a substrate, (e.g., of silicon) with overcoated cladding materials (e.g., SiOx). These waveguides are coupled to a planar waveguide region, PR1, (referring to a first coupler of the AWG device) and are spaced apart respectively to channel multiple input lights with different wavelengths from each waveguide's out-aperture diverging into the input planar region, PR1, and entering every input end (in-aperture) of the arrayed waveguides 120. The arrayed waveguides 120 terminate on an output planar region, PR2, and are configured with different optical phase lengths and disposition of their output ends (out-apertures) to provide diffraction and focusing of the emergent light along a focal line XX'.

For AWG 100, the classic Rowland circle arrangement of the arrayed waveguides 120 provides a focal line that is an arc of radius R centered on the mid-point of the output ends of the arrayed waveguides. All the different wavelengths of the input lights are multiplexed to generate an image at the focal spot which is coincident with the entrance of a single-mode output waveguide 130. The output waveguide 130 combines the lights with multiplexed wavelengths and transmits the wavelength-multiplexed light to an edge facet of the AWG device 100, where the light is 'edge-coupled', typically into a pickup fiber through use of a coupling lens.

The AWG device 100 is designed so that input signals of the desired channel wavelengths are diffracted and focused on the entrance of the single-mode output waveguide 130. Light focused onto the entrance of the output waveguide 130 then propagates along that waveguide to an output coupler (not shown). This out-coupling location is often simply at the edge facet of the chip, which can be fabricated precisely by etching. The output coupler, often including a lens, can couple the light to an external fiber. Other forms of output coupler, such as angle-etched facets and grating elements, may be used to couple the light out from the body of the chip.

As shown in FIG. 1, the AWG device 100 operates as a wavelength multiplexer. It can also be operated in reverse, with a wavelength-multiplexed signal introduced via the single-mode output waveguide 130 on the right-hand side of the figure. Thus, the individual wavelength channels comprising the multiplexed signal become dispersed by the action of the arrayed waveguides 120 and are outputted as demultiplexed single-wavelength channels, each having a different wavelength, emerging into the multiple waveguides 110 on the left-hand side of the figure.

As shown in the inset of the FIG. 1, the waveguide in all waveguide structures of the AWG device 100 from input to output can be provided by a rectangular shaped core, having a width w and height h, in a cladding material formed on a substrate. For example, a SiN core waveguide may be formed on a Si substrate with SiOx as cladding material in a typical silicon photonics device fabrication. When an AWG optical multiplexer is fabricated with precision as per its design, the channel inputs at designated wavelengths are accurately focused on the center of the output waveguide. Nonetheless, variations in wafer fabrication are common in any production environment. These variations can occur in the refractive indices of the waveguide material or the dimensions of the waveguide core due to inconsistencies in materials deposition, in processing, or as a result of the waveguide shaping processes, such as etching. Such deviations can alter the effective index of the waveguide array elements, which is crucial in determining the phase lengths of the array elements of the AWG 120 that control dispersion. This aspect of the device is particularly sensitive to these variations. Consequently, the focal points of the dispersed system channel wavelengths may shift along the focal line XX' at the entrance of the output waveguide, x, and the coupled power of the system channel wavelengths into the output waveguide is reduced. The multiplexer operates at wavelengths that are slightly different from the intended design values. Any misalignment of the focused source light from the entrance to the output guide is undesirable. If the shift of the focused spot is a substantial fraction of the guide mode width in the output waveguide, the insertion loss due to wavelength misalignment can become significant. For large misalignments the output power loss could be near total.

The problem of fabricating AWG mux/demux with sufficiently tight arrayed waveguide phase control is well known in the industry. It exists for all waveguide material systems but is particularly pronounced in those that employ a large index difference between the waveguide core and cladding, such as the Si/SiOx and SiN/SiOx waveguide systems used in silicon photonics. Great care must be taken to maintain well-controlled materials properties and dimensions. Variations in deposition and processing (e.g. annealing) and guide-core dimensions must be minimized so that predictable waveguide phase delays are obtained in the arrayed guides and the device wavelength performance is coincident with design for devices across an entire wafer, for different wafers in any given process lot, and from lot-to-lot over time. Various techniques, such as using the highest-fidelity lithography, measurement-dependent mask-selection, multi-step deposition and materials post-processing steps, have all been advocated as approaches to offer improvements in device uniformity, wavelength accuracy, and yield. Tight tolerances, complex deposition techniques, and post-processing steps, however, all increase wafer costs. It is therefore highly desirable that high tolerance designs be employed wherever possible, so that the fabrication variations that may occur in manufacturing do not significantly degrade the performance of a mux/demux operating at the wavelengths of interest. For the mux device, this means that the WDM signals should be transmitted without appreciable additional loss over the range of fabrication variations that may occur. For the demux device, it additionally means that the channel cross-talk not be significantly compromised.

The following description is presented to enable one of ordinary skill in the art to make and use the invention and to incorporate it in the context of particular applications. Various modifications, as well as a variety of uses in different applications will be readily apparent to those skilled in the art, and the general principles defined herein may be applied to a wide range of embodiments. Thus, the present invention is not intended to be limited to the embodiments presented, but is to be accorded the widest scope consistent with the principles and novel features disclosed herein.

In the following detailed description, numerous specific details are set forth in order to provide a more thorough understanding of the present invention. However, it will be apparent to one skilled in the art that the present invention may be practiced without necessarily being limited to these specific details. In other instances, well-known structures and devices are shown in block diagram form, rather than in detail, in order to avoid obscuring the present invention.

The reader's attention is directed to all papers and documents which are filed concurrently with this specification and which are open to public inspection with this specification, and the contents of all such papers and documents are incorporated herein by reference. All the features disclosed in this specification, (including any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

When an element is referred to herein as being "disposed" in some manner relative to another element (e.g., disposed on, disposed between, disposed under, disposed adjacent to, or disposed in some other relative manner), it is to be understood that the elements can be directly disposed relative to the other element (e.g., disposed directly on another element), or have intervening elements present between the elements. In contrast, when an element is referred to as being "disposed directly" relative to another element, it should be understood that no intervening elements are present in the "direct" example. However, the existence of a direct disposition does not exclude other examples in which intervening elements may be present.

Moreover, the terms left, right, front, back, top, bottom, forward, reverse, clockwise and counterclockwise are used for purposes of explanation only and are not limited to any fixed direction or orientation. Rather, they are used merely to indicate relative locations and/or directions between various parts of an object and/or components.

Unless otherwise indicated, all numbers used herein to express quantities, dimensions, and so forth should be understood as being modified in all instances by the term "about." In this application, the use of the singular includes the plural unless specifically stated otherwise, and use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

One general aspect includes an apparatus in silicon photonics planar format for wavelength multiplexing operation. The apparatus includes a first coupler formed on a substrate coupled with multiple waveguides spaced apart respectively to channel multiple input lights with different wavelengths. The apparatus also includes a wavelength dispersive device formed on the substrate and configured to diffract the multiple input lights to generate an image of diffracted lights coincident at a spot on a focal line associated with the wavelength dispersive device. The apparatus also includes a second coupler positioned in a proximity outside of the substrate and configured to out-couple light with multiplexed wavelengths directly from the image at the spot on the focal line to an external optical device, the multiplexed wavelengths may include all different wavelengths of the multiple input lights.

Implementations may include one or more of the following features. The apparatus where the wavelength dispersive device may include arrayed waveguides with varying lengths respectively from multiple input ends to multiple output ends, the multiple input ends of the arrayed waveguides being configured to receive the multiple input lights through a first planar region, the multiple output ends being configured to focus the diffracted lights through a second planar region on the to a spot on the focal line. The wavelength dispersive device is a chip device that may include at least an edge facet in the vertical direction relative to the substrate. The edge facet may include at least a portion formed along, or proximal to, a curved section of the focal line based on Rowland circle construction. The wavelength dispersive device may be a chip device configured to provide a flat focus with the focal line being straight and having the focal line proximally coincident with the edge facet. The second coupler may include a lens configured with translational tunability, or both translational and angular tunability, and positioned in a proximity outside of the edge facet. The second coupler may include a grating coupler formed around the focal line in the substrate and configured to directly out-couple the light with multiplexed wavelengths into an optical fiber tilted above the substrate. The second coupler may include a polarization beam combiner with lensing means configured to combine the separated incoming transverse electric (TE) and transverse magnetic (TM) polarized components of multiplexed wavelength light from a birefringent wavelength dispersive device onto the external optical device. The multiple waveguides associated with the first coupler and the wavelength dispersive device may include one or more types of waveguide structures with a single core or multiple cores selected from Si, SiN, and SiON in a cladding of SiOx.

Another general aspect includes in silicon photonics planar format for wavelength demultiplexing operation. The apparatus includes a first coupler formed on a substrate coupled with multiple waveguides spaced apart respectively to channel multiple output lights with different wavelengths. The apparatus also includes a wavelength dispersive device formed on the substrate and configured to diffract the multiple input lights to generate an image of diffracted lights coincident at a spot on a focal line associated with the wavelength dispersive device. The apparatus also includes a second coupler positioned in a proximity outside of the substrate and configured to in-couple light with multiplexed wavelengths directly to a spot on the focal line of the wavelength dispersive device from an external optical device, the multiplexed wavelengths may include all different wavelengths of the multiple output lights.

Implementations may include one or more of the following features. The wavelength dispersive device may include arrayed waveguides with varying lengths respectively from multiple input ends to multiple output ends, the multiple output ends of the arrayed waveguides being configured to transmit the multiple output lights through a first planar region, the multiple input ends being configured to receive the different wavelength lights through a second planar region from a spot on the focal line of the wavelength dispersive device. The second coupler may include a polarization beam splitter with lensing means configured to separate the incoming light into transverse electric (TE) and transverse magnetic (TM) polarized components and focus to different positions on an input coupling line, the input coupling line being the same as the focal line of the wavelength dispersive device. The different positions on the focal line of the wavelength dispersive device are separated by an amount to compensate polarization dispersion caused by birefringent behavior of the wavelength dispersive device. The first coupler is configured to focus the multiple outgoing lights to respective multiple multimode waveguides spaced apart along a focal line, the multimode waveguide being configured to support at least five guided modes. The apparatus may include a mode stripper coupled to the multimode waveguide for removing at least non-guided modes. The first coupler is configured to focus the multiple outgoing lights to respective multiple multimode waveguides spaced apart along a focal line. The multimode output waveguides is configured as multimode interference filters for providing broadened passband in subsequent single-mode operation.

Yet another general aspect of the subject technology provides an apparatus of planar wavelength dispersive device for silicon photonics application. The apparatus includes a first coupler formed on a substrate coupled with multiple waveguides spaced apart respectively to channel multiple input lights with different wavelengths. The apparatus also includes a wavelength dispersive device formed on the substrate and configured to diffract the multiple input lights to generate a first image of diffracted lights coincident to a spot on a focal line. The apparatus also includes a second coupler may include an array of tapered waveguides formed on the substrate to connect the focal line to an edge facet of the wavelength dispersive device, generating a second image at the edge facet based on the first image at the spot on the focal line. The apparatus also includes a third coupler positioned in a proximity outside the edge facet and configured to collect a light signal with multiplexed wavelengths from the second image and couple the light signal into an external device, the multiplexed wavelengths may include all different wavelengths of the multiple input lights. The general aspect of the subject technology may also be operated in reverse, as a demultiplexer, in which the third coupler in-couples multiwavelength light from an external device and focuses in proximity of the chip edge, the array of tapered waveguides re-image the multiwavelength light on the focal line of the wavelength dispersing device, and the first coupler out-couples the wavelength demultiplexed light to multiple waveguides spaced apart respectively to channel the multiple output lights with different wavelengths.

Implementations may include one or more of the following features. The apparatus where the wavelength dispersive device may include arrayed waveguides with varying lengths respectively from multiple input ends to multiple output ends, the multiple input ends of the arrayed waveguides being configured to receive the multiple input lights through a first planar region, the multiple output ends being configured to focus the diffracted lights through a second planar region to a spot on the focal line. The multiple waveguides associated with at least one of the first coupler, the wavelength dispersive device, and the tapered waveguides may include one or more types of waveguide structures selected from a sin core in SiOx cladding, a SiON core in SiOx cladding, a Si core in SiOx cladding, multiple SiN cores in SiOx cladding, and multiple SiON cores in SiOx cladding. The array of tapered waveguides may include five or more tapered waveguides formed in the SiN/SiOx material system, each tapered waveguide having a length in a range of 30-300 um and being tapered down from a width of 0.2-2.0 um range to a width of 0.0-0.2 um range.

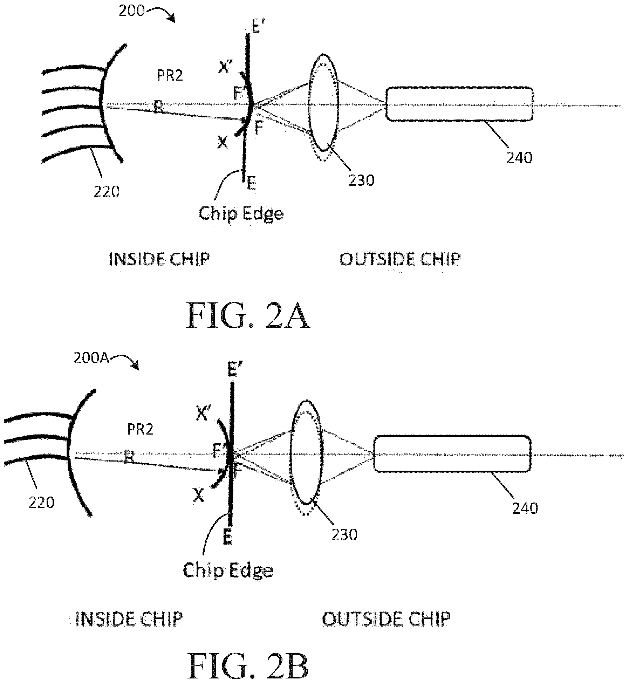

In one aspect of the subject technology, a planar optical device is provided in a layout configured to out-couple the wavelength-multiplexed light from an image at the focal line proximately positioned at an edge of the substrate without an intervening single-mode output waveguide. The proposed planar optical device, in an embodiment, can be an AWG mux device without the restriction of making the arrayed waveguides focus light from the input channel wavelengths to a predetermined point. FIG. 2A is a schematic diagram of a fabrication-tolerant AWG mux device 200 with a curved focal line according to an embodiment of the subject technology. FIG. 2A shows the multiplexing focus portion of the AWG device 200 in which wavelength-tolerant outcoupling can be achieved by directly coupling out from the focal line XX' of the output planar region PR2 by a second coupler 230 to an external optical device 240. Fabrication variations in the arrayed waveguides 220 may cause different signal wavelengths, like $\lambda_i$, $\lambda_j$, $\lambda_k$ from the input lights (see FIG. 1), to be focused on a spot located at position F' which is a short distance from the designed position F along the focal line XX'. This spatial offset from F to F' can be recovered by a repositioning of the second coupler 230. In an embodiment, the focal line XX' is formed as a circular arc based on a traditional Rowland circle construction with a radius R from a mid-point of the outputs of the arrayed waveguides 220. The AWG device 200 is a chip device with an edge facet EE' fabricated in a proximity along the focal line XX' by etching vertically through the planar waveguide structures formed on the wafer substrate. The edge facet EE' includes at least a portion being formed to follow the curved focal line containing the locations of F and F' to form an out-coupling edge facet of the AWG device 200. In the embodiment, the second coupler 230 is configured to be disposed in a proximity outside the edge facet EE' to collect the light signal from the image at the spot F'. In an example, the second coupler 230 is a lens that is configured with translational and angular tunability. The lens can be moved laterally to collect light signal from the actual spot F' rather than the designed spot F to ensure the multiplexed light is efficiently coupled into the external optical device 240 with minimum insertion loss. Therefore, the focal shift resulting from fabrication variations has a low impact on the performance of the disclosed wavelength multiplex device.

In an alternative embodiment, as shown in FIG. 2B, the chip edge facet EE' of a fabrication-tolerant AWG device 200A is formed as a straight edge that is proximally coincident with a paraxial portion around the actual spot F' and designed spot F of the curved focal line XX' based on a traditional Rowland circle construction. The second coupler 230 may be configured with translational adjustments both perpendicular and parallel to the optical axial direction and may include a small angular adjustment to fully optimize the out-coupling of the multiplexed light into the external optical device 240 to accommodate offsets between the AWG focal line XX' and the chip edge facet EE'.

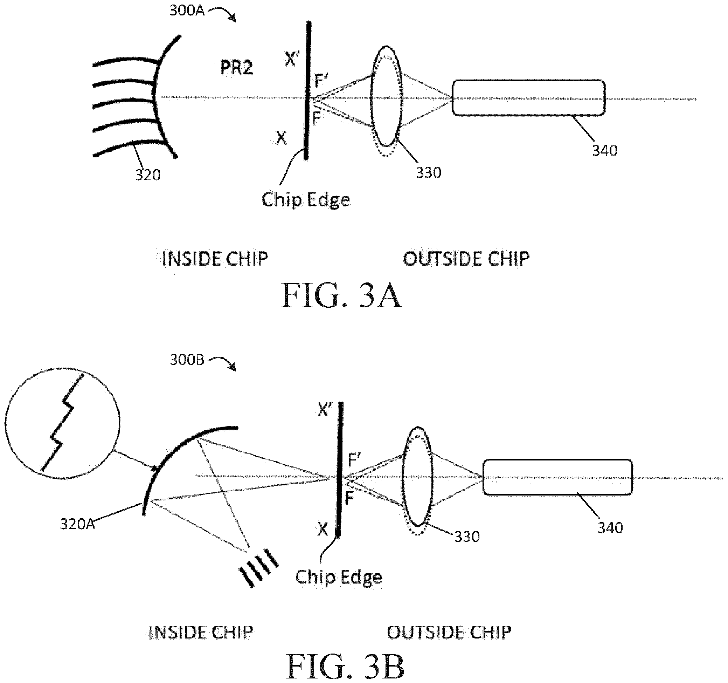

In another alternative embodiment, FIG. 3A shows a schematic diagram of a fabrication-tolerant AWG mux device 300A with a flat-field focus. AWG device 300A is configured to have a non-traditional flat-field implementation for the focal line. The focal line XX' deviates from traditional Rowland circle arc geometry and is provided as a straight line. Optical design of the arrayed waveguides 320 in this embodiment may employ one or more stigmatic points to provide low aberration focusing and set the focal line XX' to be straight rather than curved. Thus, no axial shift is required of the second coupler 330 (e.g., a lens) for outcoupling the multiplexed light to the external optical device 340 (e.g., an optical fiber). The external coupling optimization becomes easier. A flat-field AWG device 300A as proposed may be particularly useful for WDM mux/demux devices that operate over broad spectral ranges that require a large angular focal range in the Rowland circle configuration.

FIG. 3B is a schematic diagram of a reflection grating multiplexer with a flat-field focus. In the implementation the wavelength dispersive device 300B employes an etched facet echelle type reflection grating. Although there are fabrication challenges in forming a high-performance etched reflection grating, it can be implemented with a flat field focus to form the image of multiplexed light on a spot along a straight focal line. Fabrication errors resulting in an offset of the focus from its design location are readily accommodated by offsetting the output coupling lens 330 to couple light into or from an optical fiber 340.

In some examples, fabrication-tolerant AWG devices (like 200, 200A, or 300A) are formed in the SiN (core)/SiOx (cladding) waveguide system for operation at 1.3 um wavelength, using a 0.4 um thick SiN waveguide core and employing arrayed waveguide core widths of 1.0 um. Such an arrayed waveguide could be subject to a thickness tolerance of +/-5nm, a core refractive index tolerance of +/-0.01, and a core lithography etch width tolerance of +/-20nm. These variations, in combination, lead to an effective index tolerance of approximately +/- 0.3%, providing a wavelength uncertainly ($\Delta\lambda = \lambda^* \Delta n_{eff/neff}$) of +/- 4nm. A typical existing AWG multiplexer might have an output guide width that is smaller than the dispersion corresponding of a single channel spacing by an amount corresponding to the width of the waveguide gap at the AWG planar region. For such a device operating in a 20nm channel system, the above fabrication-dependent wavelength shift $\Delta\lambda$ could represent 20-30% of the guide core width, and for a 10nm system this value may rise to as much as 55%. Such fabrication errors may thus cause appreciable loss.

It is evident from the above that it would be advantageous for the wavelength dispersive device to be more wavelength-tolerant, so that effective index variations resulting from fabrication variations cause less severe increases in insertion loss. The subject technology on fabrication-tolerant AWG devices described here achieves such wavelength tolerance by employing the arrangements at the outcoupling portion of the device shown in FIG. 2A, 2B, and 3A. Wavelength-tolerance for the case of an etched facet echelle type focusing reflection grating is shown in FIG. 3B.

Within limits set by the optical aberrations, efficient outcoupling can be achieved at wavelength offsets differing from the design values due to fabrication-induced effective index changes. Use of the Rowland circle configuration for the AWG, as shown in FIGs. 2A and 2B, brings the advantage that such a construction is free of coma and, for small deviations from the primary axis, also free of spherical aberration. Use of alternative flat-field focus designs, such as illustrated in FIG. 3A, with one or more stigmatic focal points, may have coupling advantages in systems that would otherwise require a large angular focal range.

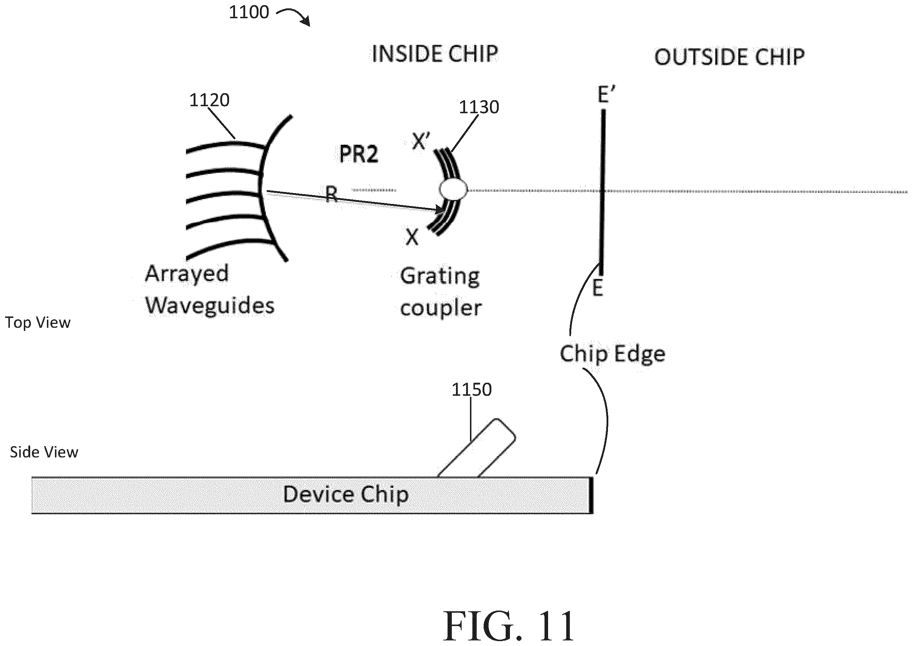

Instead of end-facet coupling, as illustrated in FIG. 2A, 2B, and 3A, in an alternative embodiment, the outcoupling coupler of the AWG device may employ a grating coupler to out-couple light of multiplexed wavelengths from the surface of the AWG device (200, 200A or 300A). FIG. 11 is a schematic diagram of an AWG device 1100 according to an embodiment of the subject technology with a grating coupler 1130 for directly coupling multiplexed light to an external optical device positioned above the substrate with an angle. This embodiment may be of benefit in dense WDM systems, for which the spectral passband of the grating coupler transmission function may be arranged to encompass the full range of system wavelengths. As shown, the arrayed waveguides (AWG) 1120 are configured to have a Rowland circular focal line XX'. The lights from the AWG 1120 are focused on to a point on the focal line XX', which may be shifted away from a designed point. Around the focal line XX', a grating coupler 1130 with multiple grating lines are disposed to at least capture the image of the lights at the actual point where the lights are focused on. The grating lines can be arranged to allow the outcoupling light to exit the AWG device 1100 in an upward direction. This allows an external optical fiber 1150, shown with a tilted end-facet disposed at the surface of the AWG device, to directly receive the outcoupling light from the grating coupler 1130.

In a practical silicon photonics-based mux/demux system the outcoupling optics must provide both high maximum coupling efficiency and high positional tolerance. Outcoupling light that is highly confined within the horizontal layer of a waveguide core typically requires tight tolerances for the coupling optics in the direction normal to the device plane. A practical system might, for example, require a coupling loss of < 1dB for a misalignment of 1um. This would not be attainable in the SiN/SiOx example waveguide system considered here which has a waveguide core layer thickness of a comparable value. In the above implementations of the wavelength dispersive device (excluding the grating out-coupled case of FIG. 11), the corresponding external coupling components use edge facets to couple the light into and out of the chip. The light guided by these components is tightly confined in the vertical direction normal to the surface of the chip, which is a result of the same high index contrast of the waveguide material system that is responsible for a high fabrication-dependent wavelength sensitivity. In another embodiment, a fabrication-tolerant wavelength dispersive mux/demux can be further improved by increasing the vertical positional tolerance of the external coupling components.

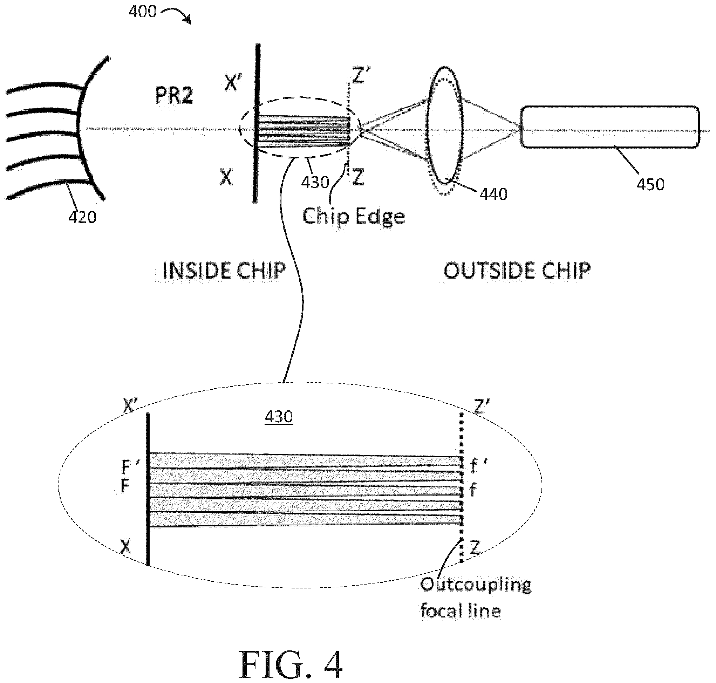

FIG. 4 is a schematic diagram of a fabrication-tolerant AWG multiplexer 400 with an array of tapered waveguides according to an embodiment of the subject technology. The arrayed waveguides 420 of the AWG multiplexer 400 are arranged to yield a focus along a focal line XX' in the outcoupling region of the device. (The input region with multiple waveguides transmitting respective light signals with different wavelengths and distributing via a first coupler to input ends of the arrayed waveguides is omitted.) Outgoing lights from output ends of the arrayed waveguides 420 are focused to a spot to generate a first image on the focal line XX', which occurs at F in the design case but may be displaced to F' as a result of fabrication variations. The focal line XX' is a distance away from chip edge ZZ' of the AWG chip device 400. A second coupler 430 is configured as an array of tapered waveguides having their wide-core entrances on the focal line XX' and narrow-core far ends on the chip edge ZZ'. In the limit, the wide-core taper ends on XX' have zero gap between the taper element cores, though in practice the gap is limited by fabrication conditions. The array of narrowing tapered waveguides (also referred to as down-tapers) is known collectively as a waveguide comb. In an embodiment, the waveguide comb 430 includes at least five down-taper elements. The waveguide comb with multiple down-tapered waveguides functions as an imager to generate a second image of the light with multiplexed wavelengths at the tips of the comb, ZZ', based on the first image of the light on the focal line XX'. Down-tapering of the waveguide comb elements reduces the mode confinement perpendicular to the surface of AWG device 400 with the result that the re-imaged light spot at ZZ' is broader normal to the device surface than that at the XX'. The focal line XX' in FIG. 4 is illustrated as a straight line as the angular range presented by the input of the taper comb is typically small. It is not intended to suggest that the AWG design provides a flat focus field. It will in general be curved.

The self-imaging property of a single core multi-mode (MM) waveguide is well-known. The multiple waveguide modes supported by a wide unbroken core excited by input light propagate along the axis of the MM waveguide and, at certain propagation distances from the input, may recombine in phase to reform an image of the input light source. If the optical field presented at the entrance to the comb array is given by $\psi(y)$, the field at distance z along the guide (comb length) from the input may be represented by

$$\Psi(y,z) = \sum_p \left[ c(p)\Psi(p,y) \exp\{i\big(\beta(0) - \beta(p)\big)z\} \right] \qquad \text{(Eq. 1)}$$

where $\beta(p)$ is the propagation constant of waveguide mode $p$, $c(p)$ is its initial modal excitation at z=0, and $p\{0,1,..\}$ are the modes supported by the MM waveguide.

In a well-confined MM waveguide, the transverse periodicity of the mode fields provides that

$$\beta(0) - \beta(p) = k\,p(p+2), \tag{Eq. 2}$$

with $k$ a constant, and reimaging occurs at $L_{image}$, where the ($k\,p(p+2)\,L_{image}$) values are integral multiples of $2\pi$, or alternatively even and odd multiples of $\pi$; a condition referred to as general interference. First imaging occurs at $L=3\pi/(\beta(0) - \beta(1))$.

The proposed waveguide comb, comprising an array of separated waveguides, presents a different case. While in the limit of zero gap the comb taper reduces to an unbroken core, with inter-guide gaps that increase in size along the down-taper the modes supported by the taper waveguide comb may be regarded as a system of supermodes resulting from the combination of waveguide modes supported by the individual comb elements. The modal field profiles of the taper waveguide comb diverge from those in the unbroken waveguide core, being concentrated in the individual core elements, and lack the simple transverse periodic structure of the former which gives rise to Eq. 2.

For an initial comb field $\psi(y)$, the field at L is now given by

$$\text{Total\_}\Psi(y, \text{L}) = \sum_p \left[ c(p)\Psi(p, y) \exp\left\{ i \times \int_0^L [(\beta(0, z) - \beta(p, z))dz] \right\} \right] \tag{Eq. 3}$$

where the phase terms are given instead by integrals of the position-dependent propagation constants along the taper. Nevertheless, a taper comb supporting a few well-confined supermodes may still provide acceptable quality imaging.

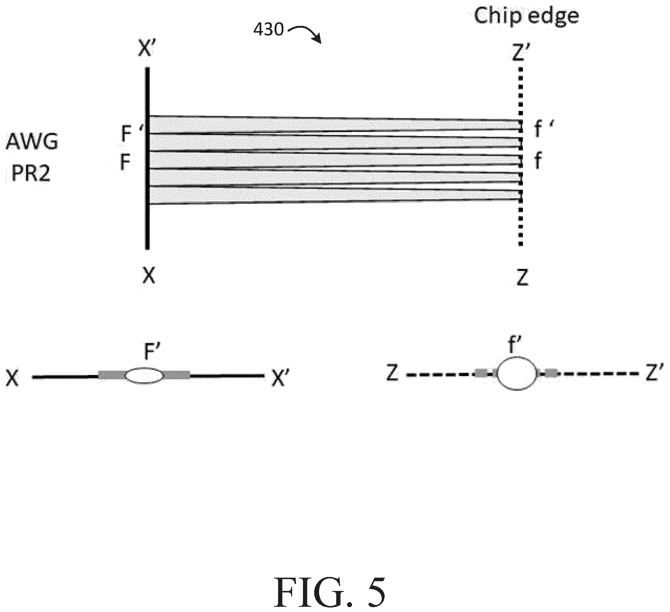

The spacing between the comb elements at the entrance ends of the tapered waveguide comb should ideally be as small as possible. This minimizes losses and back reflection, but the actual gap is often determined by the limits of the manufacturing process. The core width of the narrow waveguides at the ends of the comb is designed to enhance coupling efficiency and positional tolerance to the external optics and to accommodate the higher supermodes for more effective imaging. However, this aspect too is subject to manufacturing constraints. The length of the comb element is set to match the imaging length of the array of tapered waveguides, ensuring that the lateral field profile at the entrance end is reproduced as accurately as possible at the output, narrow tapered end of the comb. Additionally, adjustments to the taper's shape can be made to fine-tune the phase difference terms presented by the integrals in Eq. 3. When light enters the tapered waveguide comb 430 after being focused by the arrayed waveguides 420, it forms supermodes that travel along the waveguide comb 430. As the width of the comb elements narrow, the vertical field of the light broadens. FIG. 5 shows a schematic diagram illustrating beam expansion provided by the array of tapered waveguides. In the focus spot F' on AWG focal line XX', the field is seen to be confined in normal direction by the high-indexed waveguide while in the refocused spot f' on the output ends of the array of tapered waveguides (at the chip edge ZZ'), the mode field has expanded in the normal direction due to the collective effects of the narrowed widths of the multiple tapered waveguides. This expansion of the light field means that, at the output ends of the comb, it can connect with the external optical system, such as a lens 440 and fiber 450, with a higher degree of positional tolerance compared to the light's image at the arrayed waveguide focal line XX' at the entrance ends of the waveguide comb.

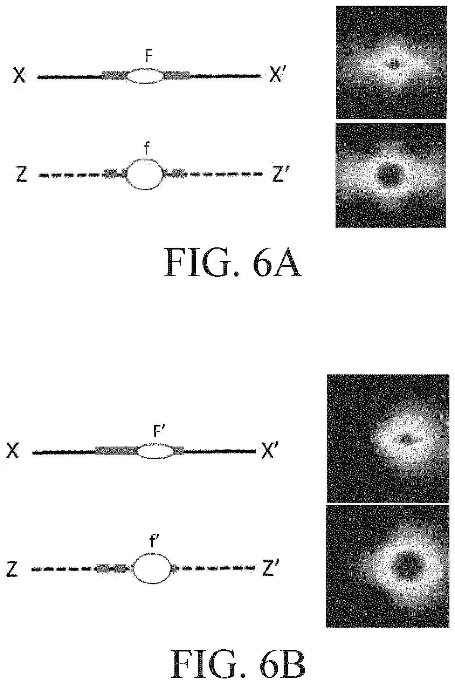

An example of a taper waveguide comb comprises 5 comb taper elements with a 1 um spacing. The waveguide is based on a 0.4 um thick SiN core in a SiOx cladding. Each waveguide comb element is down-tapered from 0.7 um width to 0.15 um. TE polarized light at 1.3 um wavelength is input from an ideal AWG mux employing 2 um wide input waveguides. FIG. 6A shows a simulated mode expansion provided by the array of tapered waveguides for an initial image at the comb center, F, which is re-imaged at f, and FIG. 6B shows the simulated mode expansion provided by the array of tapered waveguides in which the initial image, F', is shifted 1 um along XX' and re-imaged at f'. The off-center image case, F' to f', corresponds to the situation when a fabrication-induced wavelength offset is present. It is seen that in both cases the taper comb re-images the light from the arrayed waveguide focal line XX' at the chip edge ZZ' with an expanded mode profile normal to the surface of the (chip) device. Such expanded profile allows outcoupling with improved positional tolerance of the coupling optics normal to the device surface. The reduced asymmetry of the Z-Z' image also improves the potential coupling efficiency when using symmetric outcoupling optics.

As in the case of imaging in an unbroken multimode (MM) waveguide core, the imaging quality for the taper comb with multiple taper elements is generally better for light sources (e.g., the first image) located near the center of the array of tapered waveguides. This is due to the fact that these light sources are more completely represented by the overlapping of a limited number of supermodes. When the light source focal shift caused by fabrication error in the arrayed waveguides 420 (e.g., from F to F') falls within the effective imaging range of the taper comb, it can still be accurately re-imaged at the output ends of the comb with the second image center shifted (e.g., from f to f'). Good image quality is illustrated for both the re-imaging at f and at f' in Figs 6A and 6B, respectively. The output ends of the comb can be considered as a second focal line for coupling the light of multiplexed wavelengths. The second focal line can be made to be coincident with the chip edge with an etched facet. This allows for efficient coupling to the external optical components. Additionally, modifications to the standard comb taper design, such as trenching either side of the taper comb, can be beneficial. This technique can help reduce lateral light loss while still allowing the light to expand out of the device plane. In such scenarios, the propagating modes do not derive simply from the isolated taper element guide modes as described above but still adhere to the principles outlined in Eq. 3.

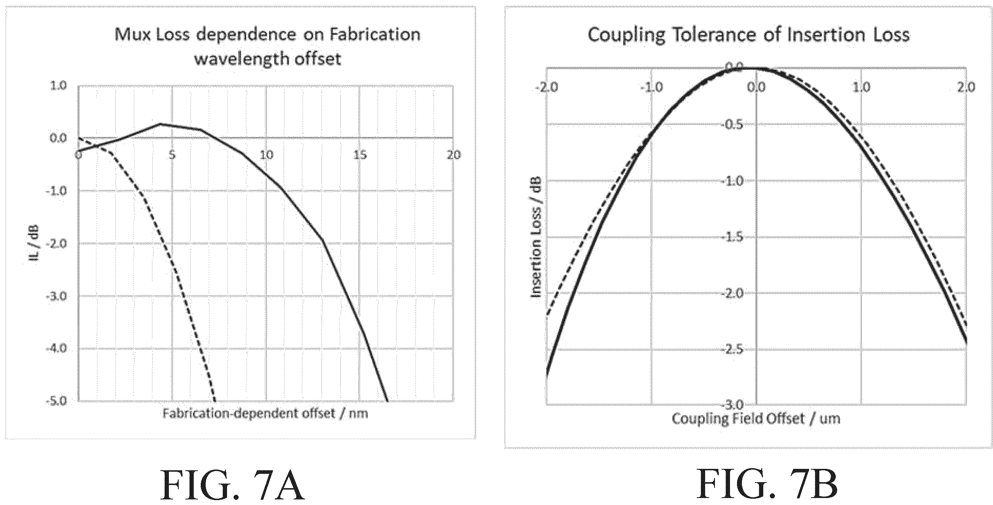

In an implementation, an exemplary AWG device based on the subject technology uses an output taper comb having an array of 5 comb taper elements with 1-um spacing. Each comb waveguide element is made of a 0.4 um thick SiN core with SiOx cladding, tapering down from 0.7 um width to 0.15 um. The AWG device is operating with 1.3 um transverse electric (TE) light in a 20 nm channel spacing WDM system. FIG. 7 shows simulation results for offset losses for such an AWG device used as a multiplexer. Outcoupling is to 6 um mode field diameter (MFD) external field and the AWG device uses 2 um input waveguides with 0.3 um inter-guide gaps. A fabrication-dependent wavelength shifts of 10 nm, i.e. half the 20-nm channel spacing, may be accommodated with <1 dB of excess loss. The wavelength-dependent loss curve for an AWG device using a 2-um single-mode output waveguide is shown dashed, for comparison. The higher tolerance to fabrication-dependent wavelength shifts provided by the output taper comb is evident.

FIG. 7B further shows the outcoupling offset tolerance of such an AWG device with output taper comb in the presence of fabrication-induced wavelength offset. A high tolerance is observed, with excess losses <0.5 dB for offsets of <0.8 um in the facet plane at the chip edge, both parallel to the device edge and perpendicular to it. This arises from the beam expansion provided by the arrayed taper waveguides. It will be recognized by those skilled in the art of integrated optics design that tradeoffs may be made in fabrication tolerance and insertion loss based upon choice of the arrayed waveguide grating and taper comb parameters. Use of asymmetric outcoupling optics may also allow the possibility of improved output coupling efficiency without appreciable sacrifice of coupling tolerance.

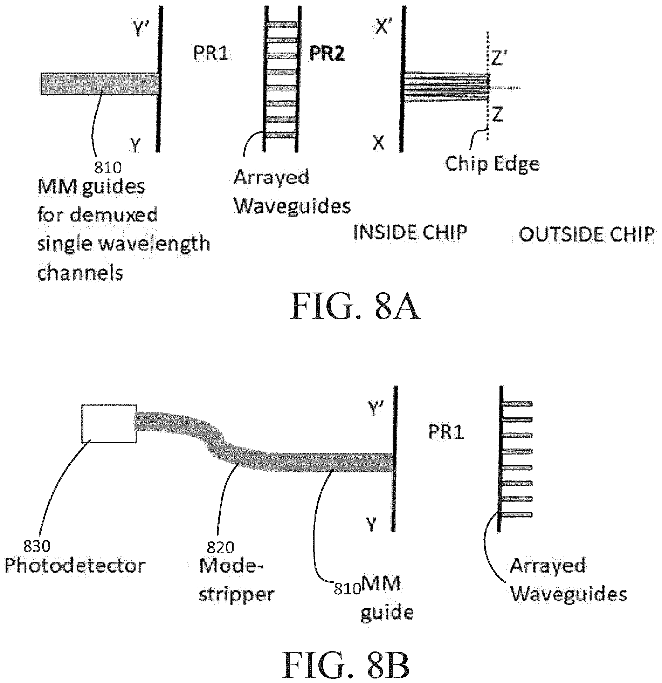

FIG. 8A illustrates an exemplary embodiment of the subject invention wherein the wavelength demultiplexed light out-coupled by the AWG device used as a demultiplexer is not required to exit in single-mode, but instead couples into a multimode (MM) waveguide, 810. Such a case is provided, for example, where the device following the MM waveguide is a photodetector 830 as shown in FIG. 8B. The AWG device here is operating in the reverse direction of the AWG device in FIG. 4. Wavelength multiplexed light enters via edge (ZZ'), couples into an array of tapered waveguides which re-images onto the focal line XX' (i.e., original focal line) and is then demultiplexed by the action of the arrayed waveguide grating onto an outcoupling line YY' (the original in-coupling line of the first coupler). Each output MM waveguide 810 in the AWG demux device according to the subject technology may advantageously be configured to support at least 5 waveguide modes. To ensure unwanted non-guided or weakly guided modes are not detected, the output multi-mode light may beneficially be passed through a mode-stripper to remove said unwanted modes. The mode-stripper may be simply a waveguide chicane 820 as illustrated in FIG. 8B.

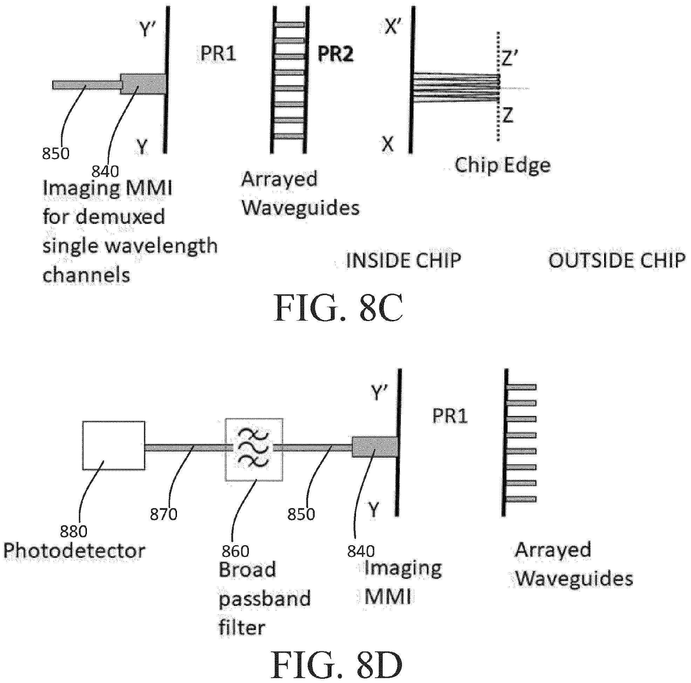

FIG. 8C illustrates an embodiment of the subject technology wherein the wavelength demultiplexed light from the AWG is required to exit in a single-mode waveguide 850. This embodiment provides passband broadening by passing the AWG exiting light through a guide-structure designed to confer broadening, such as a 2-fold imaging MM interference (MMI) filter illustrated, 840, or alternatively a horn-shaped waveguide (not shown). FIG. 8D is a schematic diagram of an AWG demultiplexer according to an embodiment of the subject technology further comprising a broad passband filter 860 out-coupled to the single-mode waveguide 870 before passing to a photodetector 880. The broad passband filter 860 is coupled to the exiting single-mode waveguide 870 to increase adjacent crosstalk rejection for the outgoing light, before being detected by a photodetector.

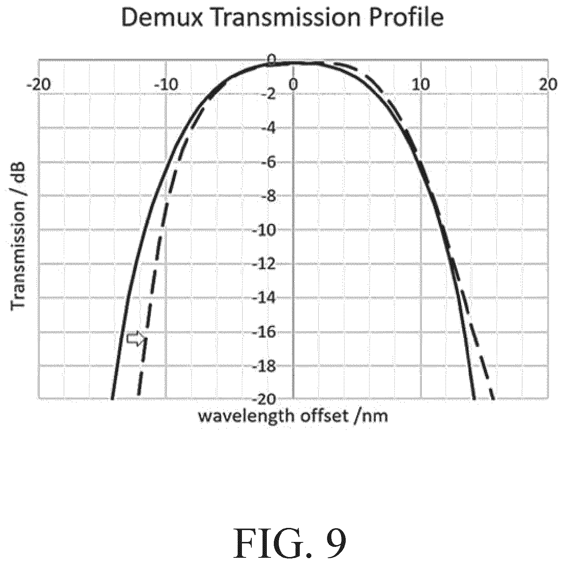

FIG. 9 shows simulation results for an exemplary embodiment of the subject technology illustrated in Figure 8A, providing an example for an AWG demultiplexer device operating at 1.3 um wavelength in a 20 nm channel spacing WDM system. Simulated AWG demultiplexing transmission result is shown for an AWG employing a 7-element 0.7um-spacing SiN/SiOx taper comb. Input wavelength-multiplexed light is a 4um MFD Gaussian field and the AWG demultiplexer disperses at 20 nm per 6.5 um, the distance between adjacent input guides. Focusing within the AWG is assumed to be ideal. Transmission result is shown for the case of no fabrication wavelength shift (solid line) and for the case where the fabrication-dependent wavelength shift is +3 nm (dashed line). Although the +3nm fabrication-dependent wavelength shift causes the focus of the channel-band center wavelength to be displaced from the center of the taper comb, light may be effectively refocused from a laterally shifted input without appreciable degradation. As shown in the FIG. 9, the low-loss passband is little changed, providing, e.g., greater than +/-6 nm tolerance at -2 dB in both cases (Without the presence of the imaging by the taper comb, the available passband would have decreased by 6 nm). In this example, taper comb in-coupling and transmission losses are similar at 0.8-0.9 dB for both cases. While the adjacent channel crosstalk (for the 20-nm channel system) is slightly compromised, suppression of >15 dB is nevertheless still maintained when the channel wavelength is +/-6nm off-center. It will be recognized by those skilled in the art of AWG design that tradeoffs may be made between passband width and adjacent channel cross talk by varying the AWG dispersion parameters and guide dimensions.

An AWG device realized in the highly confining waveguide systems typically employed on silicon substrate, typically displays birefringence arising from the use of a rectangular cross section for the arrayed waveguides. Other wavelength dispersive devices realized in planar form, e.g., an echelle reflection grating, also shows birefringence by virtue of the birefringence of its unconfined planar region. For multiplexing operation, the device birefringence is often not a concern as the source wavelengths are typically lasers operating in a single polarization and light from these sources may be introduced to the device as a single polarization, typically chosen to be TE. However, for demultiplexing operation, the WDM signal is most commonly from a remote source and is generally of an uncontrolled polarization state. To accommodate this, in another embodiment, the wavelength dispersive device of the subject technology includes an in-coupling component applied to employ polarization diversity.

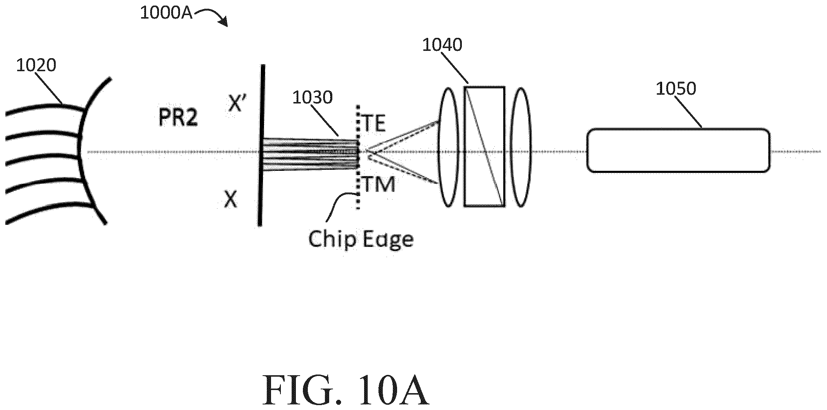

FIG. 10A is a schematic diagram of an AWG demultiplexer 1000A according to an embodiment of the subject technology with transverse electric (TE) and transverse magnetic (TM) polarized incoming light being separated and coupled at different input points. A WDM light signal transmitted via an optical fiber 1050 is in-coupled by an optical coupler 1040 to an input waveguide comb 1030. The optical coupler 1040 is configured to separate the TE and TM polarized components of the incoming light from the optical fiber 1050. Optionally, the optical coupler 1040 comprises a birefringent crystal and surrounding lenses to separate and focus the TE and TM components. Both the TE and TM components are focused on the input line of the waveguide comb 1030 at positions separated by a distance such as to pre-compensate for the internal polarization dispersion of the AWG device 1000A. The imaging properties of the tapered waveguide comb 1030 are insensitive to polarization state and by such means the TE and TM input components can both be refocused along the XX' focal line of the arrayed waveguides 1020 and coupled into the planar region PR2 of the AWG 1000A and thence directed by the AWG dispersion into the same AWG output waveguide, independent of original polarization. FIG. 10A illustrates the case where the required TE-TM spacing is small and both polarizations can be accommodated by a single tapered waveguide comb. The AWG device may also be operated in reverse, as a multiplexer.

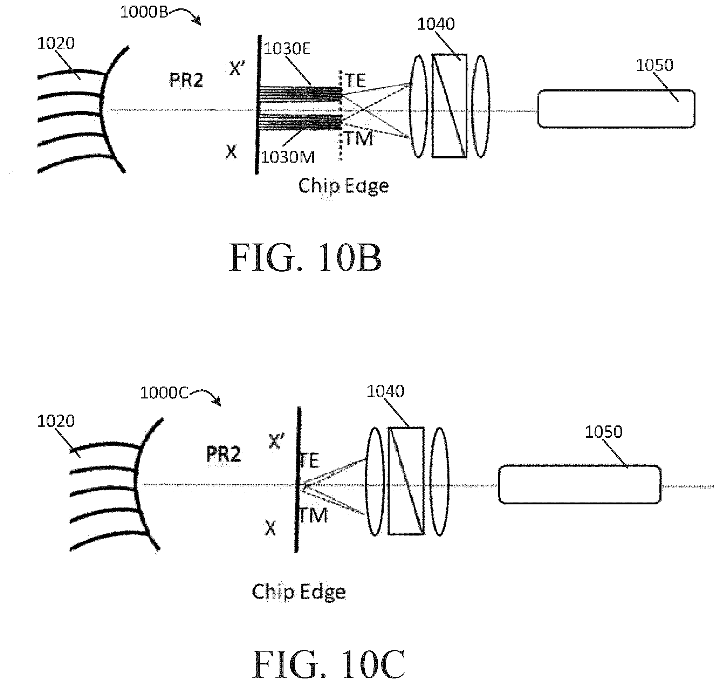

In FIG. 10B, the required spacing between TE and TM images is larger and two separate taper waveguide combs, 1030E and 1030M, are used for the AWG demux device 1000B to respectively receive the TE and TM polarized light focused by the polarization splitter with lensing means 1040. The two taper waveguide combs 1030E and 1030M are respectively transmitting the image of TE light TM light to respective image spots on the focal line XX' of the arrayed waveguides 1020. The AWG device may also be operated in reverse, as a multiplexer. The polarization splitter may also be operated in reverse, as a polarization combiner (used in association with the AWG multiplexer).

In FIG. 10C, the polarization splitter with lensing means 1040 in the AWG demux device 1000C is configured to directly focus from incoming light with any polarization from the external device 1050, respective TE mode image at one spot and TM mode image at another spot on the focal line XX' of the arrayed waveguides 1020 without employing any taper waveguide comb. The AWG device may also be operated in reverse, as a multiplexer.

The above illustrations of FIGs. 4 through 11 of the subject technology are with reference to an Arrayed Waveguide Grating (AWG) transmission multiplexer/demultiplexer. However, it is recognized that the invention, where appropriate, is also applicable to other forms of dispersive planar optical devices, such as the echelle reflection grating mux/demux, which are included by reference herein.

While illustrated for the example of a single core SiN/SiOx waveguide mux/demux, the invention taught is also applicable to multiple-core SiN/SiOx waveguide devices and to both single- and multiple-core waveguides in other material systems, such SiON/SiOx, SiN/SiON/SiOx, as well as the well-known Si/SiOx silicon photonics waveguide platform. It is also applicable to waveguide systems employing cladding materials other than SiOx, both dielectric and polymer, and to waveguide systems supported on substrates other than Si. These are all included by reference herein.

While illustrated for operation in the 1.3 um fiber optic band, operation is not limited to this wavelength but includes other fiber bands and non-fiber bands. Technology application areas include communications, both data and telecommunication, optical sensing, and optical processing.

While the illustrations indicate a common waveguide system for the input and output waveguides, the dispersive device, and the taper waveguide array, it is recognized that the different system components may be realized in different materials systems, each of which may also be composite.

While the illustrations show external coupling via a single lens to a fiber, it is understood that this is a symbolic only and that coupling may occur via any variety of lensed or non-lensed arrangements and may or may not employ a fiber to receive or provide the optical signals. Where appropriate, coupling to the device may also occur out of the device plane through, e.g., use of an angled mirror or grating coupler structure. Such arrangements may or may not employ lensing.

While the illustrated taper combs are suggestive of being composed of separate guide cores elements tapering in core width, it is recognized that the tapering may be affected by other fabrication techniques, such as partial core etching or various other means employed to taper the effective index of the taper guide regions.

While the above is a full description of the specific embodiments, various modifications, alternative constructions and equivalents may be used. Therefore, the above description and illustrations should not be taken as limiting the scope of the present invention which is defined by the appended claims.

**Claims**

1. An apparatus comprising:

   a first coupler formed on a substrate coupled with multiple waveguides spaced apart respectively to channel multiple input lights with different wavelengths;
   a wavelength dispersive device formed on the substrate and configured to diffract the multiple input lights to generate an image of diffracted lights coincident at a spot on a focal line associated with the wavelength dispersive device; and
   a second coupler positioned in a proximity outside of the substrate and configured to out-couple light with multiplexed wavelengths directly from the image at the spot on the focal line to an external optical device, the multiplexed wavelengths comprising all different wavelengths of the multiple input lights.

2. The apparatus of claim 1, wherein the wavelength dispersive device comprises arrayed waveguides with varying lengths respectively from multiple input ends to multiple output ends, the multiple input ends of the arrayed waveguides being configured to receive the multiple input lights through a first planar region, the multiple output ends being configured to focus the diffracted lights through a second planar region on the to a spot on the focal line.

3. The apparatus of claim 2, wherein the wavelength dispersive device is a chip device comprising at least an edge facet in vertical direction relative to the substrate.

4. The apparatus of claim 3, wherein the edge facet comprises at least a portion formed along, or proximal to, a curved section of the focal line based on Rowland circle construction, and/or

   wherein the wavelength dispersive device is a chip device configured to provide a flat focus with the focal line being straight and having the focal line proximally coincident with the edge facet, and/or
   wherein the second coupler comprises a lens configured with translational tunability, or both translational and angular tunability, and positioned in a proximity outside of the edge facet.

5. The apparatus of any of the preceding claims, wherein the second coupler comprises a grating coupler formed around the focal line in the substrate and configured to directly out-couple the light with multiplexed wavelengths into an optical fiber tilted above the substrate, and/or
   wherein the second coupler comprises a polarization beam combiner with lensing means configured to combine the separated incoming transverse electric (TE) and transverse magnetic (TM) polarized components of multiplexed wavelength light from a birefringent wavelength dispersive device onto the external optical device.

6. The apparatus of any of the preceding claims, wherein the multiple waveguides associated with the first coupler and the wavelength dispersive device comprise one or more types of waveguide structures with a single core or multiple cores selected from Si, SiN, and SiON in a cladding of SiOx.

7. An apparatus comprising:

   a first coupler formed on a substrate coupled with multiple waveguides spaced apart respectively to channel multiple output lights with different wavelengths;
   a wavelength dispersive device formed on the substrate and configured to diffract multiple input lights from a spot on a focal line associated with the wavelength dispersive device to the multiple output lights; and
   a second coupler positioned in a proximity outside of the substrate and configured to in-couple light with multiplexed wavelengths directly to a spot on the focal line of the wavelength dispersive device from an external optical device, the multiplexed wavelengths comprising all different wavelengths of the multiple output lights.

8. The apparatus of claim 7, wherein the wavelength dispersive device comprises arrayed waveguides with varying lengths respectively from multiple input ends to multiple output ends, the multiple output ends of the arrayed waveguides being configured to transmit the multiple output lights through a first planar region, the multiple input ends being configured to receive the different wavelength lights through a second planar region from a spot on the focal line of the wavelength dispersive device.

9. The apparatus of claim 7 or 8, wherein the second coupler comprises a polarization beam splitter with lensing means configured to separate the incoming light into transverse electric (TE) and transverse magnetic (TM) polarized components and focus to different positions on an input coupling line, the input coupling line being the same as the focal line of the wavelength dispersive device, wherein the different positions on the focal line of the wavelength dispersive device are separated by an amount to compensate polarization dispersion caused by birefringent behavior of the wavelength dispersive device.

10. The apparatus of any of claims 7 to 9, wherein the first coupler is configured to focus the multiple outgoing lights to respective multiple multimode waveguides spaced apart along a focal line, the multimode waveguide being configured to support at least five guided modes,

in particular, further comprising a mode stripper coupled to the multimode waveguide for removing at least non-guided modes.

11. The apparatus of any of claims 7 to 9, wherein the first coupler is configured to focus the multiple outgoing lights to respective multiple multimode waveguides spaced apart along a focal line, the multiple multimode waveguides configured as multimode interference filters for providing broadened passband in subsequent single-mode operation.

12. An apparatus comprising:

a first coupler formed on a substrate coupled with multiple waveguides spaced apart respectively to channel multiple input lights with different wavelengths;
a wavelength dispersive device formed on the substrate and configured to diffract the multiple input lights to generate a first image of diffracted lights coincident to a spot on a focal line;
a second coupler comprising an array of tapered waveguides formed on the substrate to connect the focal line to an edge facet of the wavelength dispersive device, generating a second image at the edge facet based on the first image at the spot on the focal line; and
a third coupler positioned in a proximity outside the edge facet and configured to collect a light signal with multiplexed wavelengths from the second image and couple the light signal into an external device, the multiplexed wavelengths comprising all different wavelengths of the multiple input lights.

13. The apparatus of claim 12, wherein the wavelength dispersive device comprises arrayed waveguides with varying lengths respectively from multiple input ends to multiple output ends, the multiple input ends of the arrayed waveguides being configured to receive the multiple input lights through a first planar region, the multiple output ends being configured to focus the diffracted lights through a second planar region to a spot on the focal line.

14. The apparatus of claim 12 or 13, wherein the multiple waveguides associated with at least one of the first coupler, the wavelength dispersive device, and the tapered waveguides, comprise one or more types of waveguide structures selected from a SiN core in SiOx cladding, a SiON core in SiOx cladding, a Si core in SiOx cladding, multiple SiN cores in SiOx cladding, and multiple SiON cores in SiOx cladding, and/or

wherein the array of tapered waveguides comprises five or more tapered waveguides formed in the SiN/SiOx material system, each tapered waveguide having a length in a range of 30-300 um and being tapered down from a width of 0.2-2.0 um range to a width of 0.0-0.2 um range.

15. The apparatus of any of claims 12 to 14, is operated as a wavelength demultiplexer comprising,

the first coupler formed on a substrate coupled with multiple waveguides spaced apart respectively to channel multiple output lights with different wavelengths;
the wavelength dispersive device formed on the substrate and configured to diffract multiple input lights from a spot on a focal line associated with the wavelength dispersive device to the multiple output lights;
the second coupler comprising an array of tapered waveguides formed on the substrate to connect the focal line to an edge facet of the wavelength dispersive device, generating a second image at the spot on the focal line based on the first image at the edge facet; and
the third coupler positioned in a proximity outside the edge facet and configured to collect a light signal with multiplexed wavelengths from an external device and couple the light signal to the second image, the multiplexed wavelengths comprising all different wavelengths of the multiple output lights.

FIG. 1

(Existing Art)

200

E'

PR2

X'

F'

R

F

220

X

E

Chip Edge

INSIDE CHIP                OUTSIDE CHIP

230

240

## FIG. 2A

200A

E'

PR2

X'

F'

R

F

220

X

E

Chip Edge

INSIDE CHIP                OUTSIDE CHIP

230

240

## FIG. 2B

EP 4 617 741 A2

EP 4 617 741 A2

300A

PR2

X'

F'

F

X

320

Chip Edge

330

340

INSIDE CHIP          OUTSIDE CHIP

FIG. 3A

300B

X'

F'

F

X

320A

Chip Edge

330

340

INSIDE CHIP          OUTSIDE CHIP

FIG. 3B

FIG. 4

EP 4 617 741 A2

FIG. 5

FIG. 6A

FIG. 6B

EP 4 617 741 A2

FIG. 7B

FIG. 7A

FIG. 8A

MM guides for demuxed single wavelength channels

810

Arrayed Waveguides

PR1

PR2

Arrayed Waveguides

INSIDE CHIP

OUTSIDE CHIP

Chip Edge

FIG. 8B

Arrayed Waveguides

PR1

810 MM guide

820 Mode-stripper

830 Photodetector

FIG. 8C

FIG. 8D

EP 4 617 741 A2

Demux Transmission Profile

FIG. 9

EP 4 617 741 A2

FIG. 10A

EP 4 617 741 A2

FIG. 10B

FIG. 10C

EP 4 617 741 A2

1100

INSIDE CHIP                    OUTSIDE CHIP

1120                        1130        E'

PR2        X'

R                    X

Arrayed          Grating
Waveguides       coupler           E

Top View                                Chip Edge

1150

Side View

Device Chip

FIG. 11